# EUROPEAN PATENT SPECIFICATION

(11) **EP 2 417 724 B1**
(45) Date of publication and mention of the grant of the patent: **18.07.2018**
(21) Application number: 10715023.7
(22) Date of filing: 09.04.2010
(51) Int. Cl.: H04L 5/00, H04L 1/18, H04W 28/06, H04W 74/04, H04W 72/12, H04L 1/00, H04W 84/12, H04W 72/04

(54) **Acknowledgement resource allocation and scheduling for WLAN**
Ressourcenzuweisung und Einplanung für die Übertragung von ACK-Informationen in WLAN-Netzwerken
Attribution des ressources et ordonnancement pour la transmission des informations de genre ACK dans des réseaux de communication de type WLAN

(30) Priority: 10.04.2009 US 422145
(43) Date of publication of application: 15.02.2012
(73) Proprietor: QUALCOMM Incorporated, San Diego, CA 92121 (US)
(72) Inventor: VERMANI, Sameer, San Diego California 92121 (US); SRIDHARA, Vinay, San Diego California 92121 (US)
(74) Representative: Wimmer, Hubert
(86) International application number: PCT/US2010/030614
(87) International publication number: WO 2010/118376

(56) References cited:
- WO-A1-2005/104434
- WO-A2-2006/091809
- WO-A2-2010/022264
- US-A1- 2005 226 273
- US-A1- 2005 285 719
- US-A1- 2006 056 443

## Description

### BACKGROUND

### I. Field

The following description relates generally to communication systems, and more particularly to power and resource efficiency in a wireless network.

### II. Background

In order to address the issue of increasing bandwidth requirements that are demanded for wireless communications systems, different schemes are being developed to allow multiple user terminals to communicate with a single access point by sharing the channel resources while achieving high data throughputs. Multiple Input or Multiple Output (MIMO) technology represents one such approach that has recently emerged as a popular technique for the next generation communication systems. MIMO technology has been adopted in several emerging wireless communications standards such as the Institute of Electrical Engineers (IEEE) 802.11 standard. IEEE 802.11 denotes a set of Wireless Local Area Network (WLAN) air interface standards developed by the IEEE 802.11 committee for short-range communications (e.g., tens of meters to a few hundred meters).

MIMO technology holds great promise for wireless communication systems of the future. However, there is still a need to further increase data throughput within MIMO applications, as well as other communication technologies.

Attention is drawn to document WO 2006/091809 A2 which relates to scheduling of acknowledgement by a communication station that is configured to operate in a communications system that supports frame aggregation. Communication stations can determine when to schedule acknowledgements based on aggregated frame information.

Further attention is drawn to document WO 2005/104434 A1 which relates to a method and apparatus to acknowledge multicast transmission by a station. The station may transmit acknowledgement signal over a dedicated frequency subchannel which may be allocated by an access point.

Furthermore attention is drawn to document US 2005/285719 A1 which relates to an initiator device in a high throughput wireless network being able to communicate with multiple responder devices during a wireless frame exchange. The initiator may transmit a frame that includes offset and duration related information for each of multiple responders. The offset and duration related information for each responder identifies a transmit time period during which that responder may respond to the initiator.

### SUMMARY

In accordance with the present invention, a method and apparatus for communication, as set forth in claims 1 and 2, respectively, and a method and apparatus as set forth in claims 7 and 8, respectively, are provided. Further embodiments are claimed in the dependent claims. Any other reference to embodiments not falling within the scope of the claims is to be understood as examples useful for understanding the invention.

Aspects disclosed herein may be advantageous to systems employing wireless local area networks (WLANs) in accordance with the IEEE 802.11 standard. However, the disclosure is not intended to be limited to such systems, as other applications may benefit from similar advantages.

### BRIEF DESCRIPTION OF THE DRAWINGS

These and other sample aspects of the disclosure will be described in the detailed description that follow, and in the accompanying drawings, wherein:
FIG. 1 is a diagram of a wireless communications network;
FIG. 2 illustrates frame aggregation in MAC and PHY layers of a wireless node in the wireless communications network of FIG.2;
FIGS. 3 and 4 illustrate and example of a scheduled Block Acknowledgment in a wireless communications network of FIG.1 utilizing TDMA;
FIGS. 5 and 6 illustrate and example of a scheduled Block Acknowledgment in a wireless communications network of FIG.1 utilizing OFDMA;
FIGS. 7 and 8 illustrate and example of a scheduled Block Acknowledgment in a wireless communications network of FIG.1 utilizing SDMA;
FIG. 9 is a block diagram illustrating an exemplary hardware configuration for a processing system in a wireless node in the wireless communications network of FIG. 1;

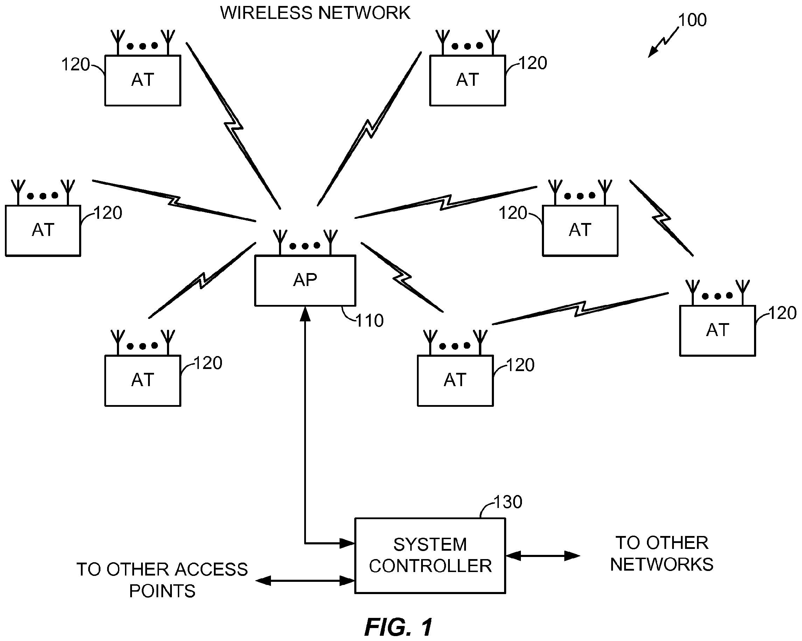

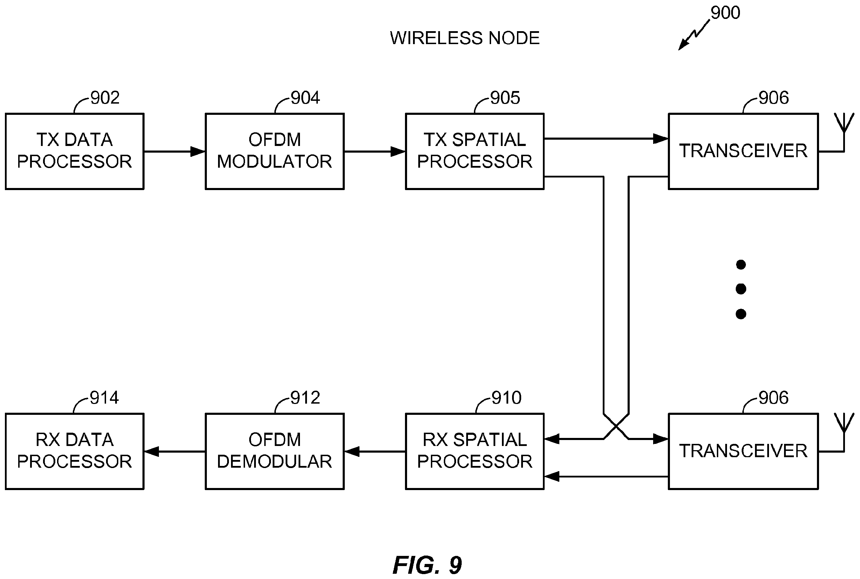

FIG. 9 is a block diagram of an example of signal processing functions of a PHY layer of a wireless node in the wireless communications network of FIG.1;

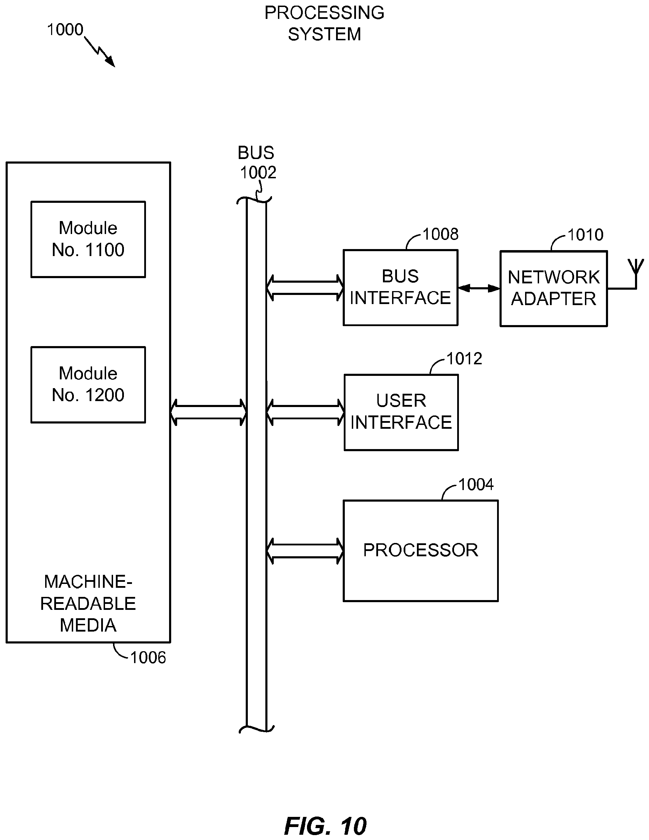

FIG. 10 is a block diagram illustrating an exemplary hardware configuration for a processing system in a wireless node in the wireless communications network of FIG. 1;

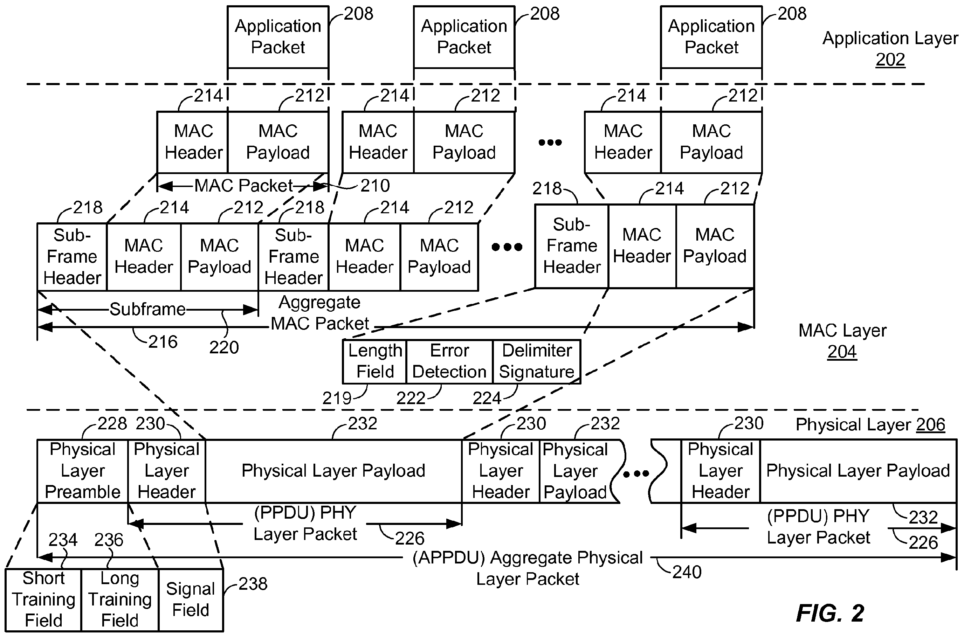

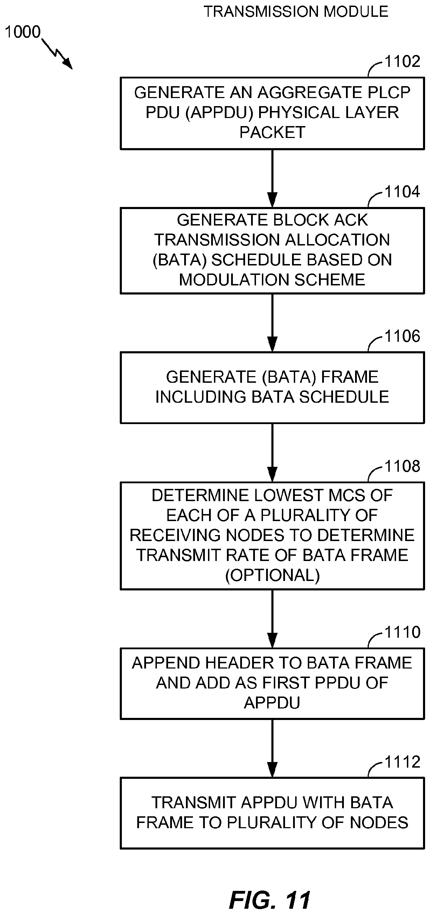

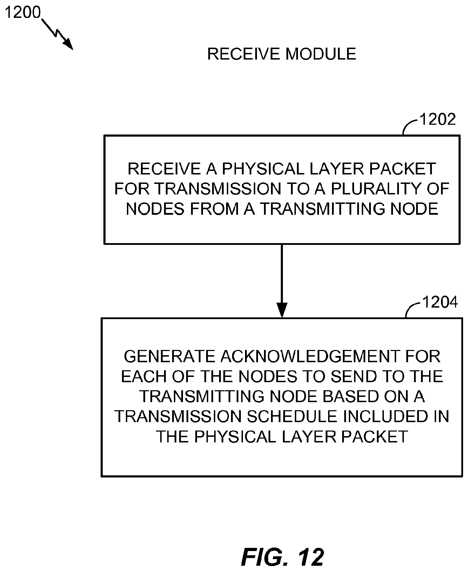

FIGs. 11 and 12 are flow charts illustrating functionality of software modules with respect to various aspects disclosed in FIGS. 2-10;

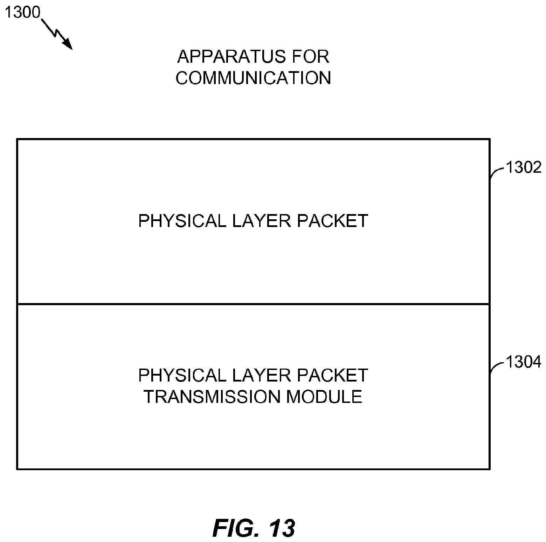

FIG. 13 is a block diagram illustrating an example of the functionality of an apparatus for communication according to an aspect of the disclosure; and

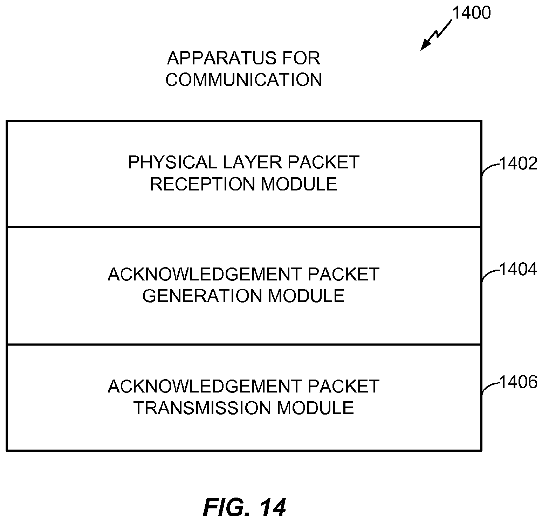

FIG. 14 is a block diagram illustrating an example of the functionality of an apparatus for communication according to another aspect of the disclosure.

In accordance with common practice, some of the drawings may be simplified for clarity. Thus, the drawings may not depict all of the components of a given apparatus (e.g., device) or method. Finally, like reference numerals may be used to denote like features throughout the specification and figures.

### DETAILED DESCRIPTION

Various aspects of the disclosure are described more fully hereinafter with reference to the accompanying drawings. They may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that that the scope of the disclosure is intended to cover any aspect of an apparatus or method contained herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosed herein may be embodied by one or more elements of a claim.

Several aspects of a wireless network will now be presented with reference to FIG. 1. The wireless network 100 is shown with several wireless nodes, generally designated as nodes 110 and 120. Each wireless node is capable of receiving and/or transmitting. In the discussion that follows the term "receiving node" may be used to refer to a node that is receiving and the term "transmitting node" may be used to refer to a node that is transmitting. Such a reference does not imply that the node is incapable of performing both transmit and receive operations.

In the detailed description that follows, the term "access point" is used to designate a transmitting node and the term "access terminal" is used to designate a receiving node for downlink communications, whereas the term "access point" is used to designate a receiving node and the term "access terminal" is used to designate a transmitting node for uplink communications. However, those skilled in the art will readily understand that other terminology or nomenclature may be used for an access point and/or access terminal. By way of example, an access point may be referred to as a base station, a base transceiver station, a station, a terminal, a node, an access terminal acting as an access point, or some other suitable terminology. An access terminal may be referred to as a user terminal, a mobile station, a subscriber station, a station, a wireless device, a terminal, a node, or some other suitable terminology. The various concepts described throughout this disclosure are intended to apply to all suitable wireless nodes regardless of their specific nomenclature.

The wireless network 100 may support any number of access points distributed throughout a geographic region to provide coverage for access terminals 120. A system controller 130 may be used to provide coordination and control of the access points, as well as access to other networks (e.g., Internet) for the access terminals 120. For simplicity, one access point 110 is shown. An access point is generally a fixed terminal that provides backhaul services to access terminals in the geographic region of coverage; however, the access point may be mobile in some applications. An access terminal, which may be fixed or mobile, utilizes the backhaul services of an access point or engages in peer-to-peer communications with other access terminals. Examples of access terminals include a telephone (e.g., cellular telephone), a laptop computer, a desktop computer, a Personal Digital Assistant (PDA), a digital audio player (e.g., MP3 player), a camera, a game console, or any other suitable wireless node.

The wireless network 100 may support MIMO technology. Using MIMO technology, an access point 110 may communicate with multiple access terminals 120 simultaneously using Spatial Division Multiple Access (SDMA). SDMA is a multiple access scheme which enables multiple streams transmitted to different receivers at the same time to share the same frequency channel and, as a result, provide higher user capacity. This is achieved by spatially precoding each data stream on the downlink. The spatially precoded data streams arrive at the access terminals with different spatial signatures, which enable each access terminal 120 to recover the data stream destined for that access terminal 120. On the uplink, each access terminal 120 transmits a spatially precoded data stream, which enables the access point 110 to identify the source of each spatially precoded data stream.

One or more access terminals 120 may be equipped with multiple antennas to enable certain functionality. With this configuration, multiple antennas at the access point 110 may be used to communicate with a multiple antenna access terminal to improve data throughput without additional bandwidth or transmit power. This may be achieved by splitting a high data rate signal at the transmitter into multiple lower rate data streams with different spatial signatures, thus enabling the receiver to separate these streams into multiple channels and properly combine the streams to recover the high rate data signal.

While portions of the following disclosure will describe access terminals that also support MIMO technology, the access point 110 may also be configured to support access terminals that do not support MIMO technology. This approach may allow older versions of access terminals (i.e., "legacy" terminals) to remain deployed in a wireless network, extending their useful lifetime, while allowing newer MIMO access terminals to be introduced as appropriate.

In the detailed description that follows, various aspects of the disclosure will be described with reference to a MIMO system supporting any suitable wireless technology, such as Orthogonal Frequency Division Multiplexing (OFDM). OFDM is a technique that distributes data over a number of subcarriers spaced apart at precise frequencies. The spacing provides "orthogonality" that enables a receiver to recover the data from the subcarriers. An OFDM system may implement IEEE 802.11, or some other air interface standard. Other suitable wireless technologies include, by way of example, Code Division Multiple Access (CDMA), Time Division Multiple Access (TDMA), or any other suitable wireless technology, or any combination of suitable wireless technologies. A CDMA system may implement with IS-2000, IS-95, IS-856, Wideband-CDMA (WCDMA), or some other suitable air interface standard. A TDMA system may implement Global System for Mobile Communications (GSM) or some other suitable air interface standard. As those skilled in the art will readily appreciate, the various aspects of this disclosure are not limited to any particular wireless technology and/or air interface standard.

A wireless node, whether an access point (AP) or access terminal (AT), may be implemented with a protocol that utilizes a layered structure. By way of example, as shown in FIG.2, a layered structure may include an application layer 202, a Medium Access Control layer (MAC) 204 and a physical layer (PHY) 206. The physical layer 206 implements all the physical and electrical specifications to interface the wireless node to the shared wireless channel. The MAC layer 204 coordinates access to the shared wireless channel and is used to interface higher layers, such as the application layer 202, to the physical layer 206. The application layer 202 performs various data processing functions including, by way of example, speech and multimedia codecs and graphics processing. Additional protocol layers (e.g., network layer, transport layer) may be required for any particular application. In some configurations, the wireless node may act as a relay point between an access point and an access terminal, or two access terminals, and therefore, may not require an application layer. Those skilled in the art will be readily able to implement the appropriate protocol for any wireless node depending on the particular application and the overall design constraints imposed on the overall system. The term "data packet" as used herein is to be construed broadly as any of a MAC packet, an aggregate MAC packet (described below), a physical layer payload (also described below), a packet received from the application layer, fragments and/or combinations of other packets, a frame, packet, timeslot, segment, or any other suitable nomenclature.

When the wireless node is in a transmit mode, the application layer 202 processes data, segments the data into packets 208, and provides the data packets 208 to the MAC layer 204. The MAC layer 204 assembles MAC packets 210 with each data packet 208 from the application layer 202 being carried by the payload 212 of a MAC packet 210. Each MAC packet 210 includes a MAC header 214 appended to the payload 212. The MAC packet 210 is sometimes referred to as a MAC Protocol Data Unit (MPDU), but may also be referred to as a frame, packet, timeslot, segment, or any other suitable nomenclature. Although FIG. 2 shows one application layer data packet 208 per MAC packet 210, it is also possible to incorporate multiple application layer data packets into the payload of one MAC packet. Alternatively, multiple application layer data packets may be fragmented and distributed over more than one MAC packet.

Multiple MAC packets 210 having a same destination address may be combined into one aggregate MAC packet 216. An aggregate MAC packet 216 is sometimes referred to as an aggregate MAC protocol data unit (AMPDU). Each MAC packet 210 in the aggregate MAC packet 216 is appended with a sub frame header 218. A MAC packet appended with a subframe header as shown in FIG. 2 is referred to herein simply as a subframe 220. The aggregate MAC packet 216 may be made up of several such subframes 220. Each subframe header 218 may include a length field 219, error detection 222, and a delimiter signature 224. The beginning and end of each subframe 220 may be determined by the length field 219 and delimiter signature 224. The error detection may comprise a cyclic redundancy check, a checksum, or any other suitable error detection code that enables verification of respective subframes 220 independently. MAC-level frame aggregation as described above allows for the removal of spaces between MAC packets (inter-frame spaces) as well as the removal of redundancies in the MAC headers (header compression). For example, if each MAC packet 210 in an aggregate MAC packet 216 is to be transmitted to the same receiving node, the destination address may be eliminated from the MAC headers 214 of the subframes 220 following the first subframe in the aggregate MAC packet 216.

Although FIG. 2 shows one MAC packet per subframe, each subframe may include more than one MAC packet. Alternatively, multiple MAC packets may be fragmented and distributed over more than one subframe. In some cases, although the subframes 220 in the aggregate MAC packet 216 are to be transmitted to the same receiving node, they are not required to have the same source address.

When the MAC layer 204 decides to transmit, it provides a block of MAC packets, e.g., the aggregate MAC packet 216, to the PHY layer 206. The PHY layer 206 assembles a PHY packet 226 by appending a preamble (sometimes referred to as a Physical Layer Convergence Protocol (PLCP)) 228 and a header 230 to a payload 232 carrying, for example, the aggregate MAC packet. The PHY packet 226 is sometimes referred to as a PLCP Protocol Data Unit (PPDU), but may also be referred to as a frame, packet, timeslot, segment, or any other suitable nomenclature. The preamble may include at least one Short Training Field (STF) 234 and at least one Long Training Field (LTF) 236. The STF and LTF may be used by a receiving node for detecting the start of the PHY packet 226, synchronizing to the transmitter's node data clock, performing channel estimation, calculating the AGC gain, and in some cases, estimating spatial streams in networks supporting MIMO technology. The header 230 may include a Signal Field (SIG) 238. The SIG field 238 may include information regarding the data rate and length of the payload 232.

The PHY layer may assemble multiple PHY packets (or PPDUs) 226 into an aggregate PHY layer packet 240, also referred to as an Aggregate PPDU (APPDU). As shown in FIG. 2, the aggregate PHY layer packet (or APPDU) 240 includes a single PHY layer preamble 228 including an STF 234 and an LTF 236. Following the preamble 228 are three (although fewer or more than three are possible) PHY packets (or PPDUs) 226, each including a PHY layer payload 232 preceded by a corresponding PHY header 230 including a SIG field 238. The preambles of each of the PHY packets (or PPDUs) 226 are aggregated into the single preamble 228 of the aggregate PHY layer packet (or APPDU) 240. Thus, only one PHY layer preamble 228 is required for the entire aggregate PHY layer packet 240 containing multiple PHY packets (or PPDUs) 226. Each of the PHY layer payloads 232 in the aggregate PHY layer packet 240 may be transmitted to the same or different receiving nodes, and further, may be transmitted at a same or different data rate by the SIG field 238 provided before each PHY layer payload 232. All receiving nodes can estimate the channel, synchronize and calculate the AGC gain using one preamble. Combining PHY layer payloads in an aggregate PHY packet also allows for removal of inter frame spacing between aggregate MAC packets as well as aggregation of the preambles (training fields) for multiple aggregate MAC packets, one or more of which may be contained in a PHY packet 226 of an aggregate PHY packet 240.

Although FIG. 2 shows one aggregate MAC packet per PHY layer payload, each PHY layer payload may include more than one aggregate MAC packet. Alternatively, one or more aggregate MAC packets may be fragmented and distributed over more than one PHY layer payload.

As will be discussed in greater detail later, the PHY layer 206 is also responsible for providing various signal processing functions (e.g., modulating, coding, spatial processing, etc.).

When the wireless node is in a receive mode, the process described above is reversed. That is, the PHY layer 206 detects an incoming aggregate PHY packet 240 from the wireless channel. The preamble 228 allows the PHY layer 206 to lock in on the aggregate PHY packet 240 and perform various signal processing functions (e.g., demodulating, decoding, spatial processing, etc.). Once processed, the PHY layer 206 recovers the aggregate MAC packets 216 carried in the payloads 232 of the aggregate PHY packet 240 and provides the aggregate MAC packets 216 to the MAC layer 204.

The MAC layer 204 recovers the aggregate MAC packets 216 with the source address for the receiving node in one or more of the MAC headers 214. The MAC layer 204 then checks the error detection code for each of the MAC packets 210 in the recovered aggregate MAC packets 216 to determine whether it was successfully decoded. If the error detection code for a MAC packet 210 indicates that it was successfully decoded, then the payload 212 for the MAC packet is provided to the application layer 202. If the error detection code for a MAC packet 210 indicates that it was unsuccessfully decoded, the MAC packet 210 is discarded.

In order to determine whether MAC packets 210 in an aggregate MAC packet 216 were received and decoded successfully, the transmitting node may send an acknowledgment (ACK) request to the receiving node. The ACK request may take the form of a Block ACK Request (BAR) which requests the receiving node to acknowledge every MAC packet 210 transmitted in the aggregate MAC packet 216. In response to a BAR, the receiving node responds with a Block ACK (BA) indicating which MAC packets 210 in the aggregate MAC packet 216 were successfully decoded. The transmitting node uses the BA to determine which MAC packets 210, if any, require retransmission.

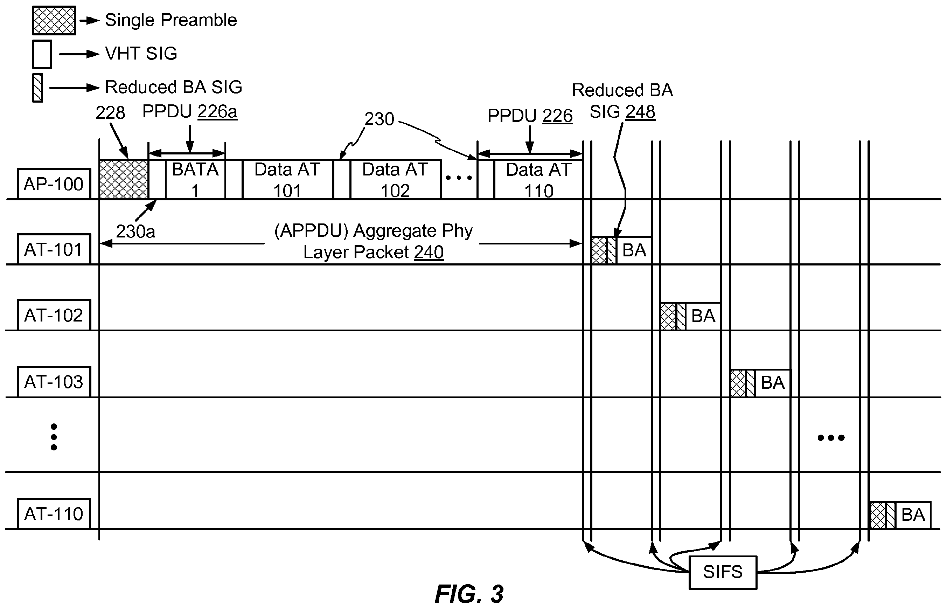

Alternatively, the transmitting node (labeled as AP 100 in the examples described below with respect to FIGS. 3-8) may specify a BA transmission allocation schedule for all receiving nodes. In the examples shown in FIGS. 3-8, an aggregate PHY layer packet (or APPDU) 240 may be configured to carry, in a first PHY packet (or PPDU) 226a thereof, a Block ACK Transmission Allocation (BATA) frame, which enables scheduling and resource allocation of BAs. The BA transmission allocation schedule is provided via the BATA frame to each receiving node (labeled as ATs 101-110 in FIGS. 3-8), and includes a channel designation for each receiving node to send its respective BA to the transmitting node. The channel designation may include a transmission time, a tone (or frequency) allocation, a spatial allocation, a transmission period (epoch or duration), and/or some other suitable or desirable channel designation, or, in some cases, various combinations thereof. Thus, each receiving node may know, a priori, how and/or when to send a BA.

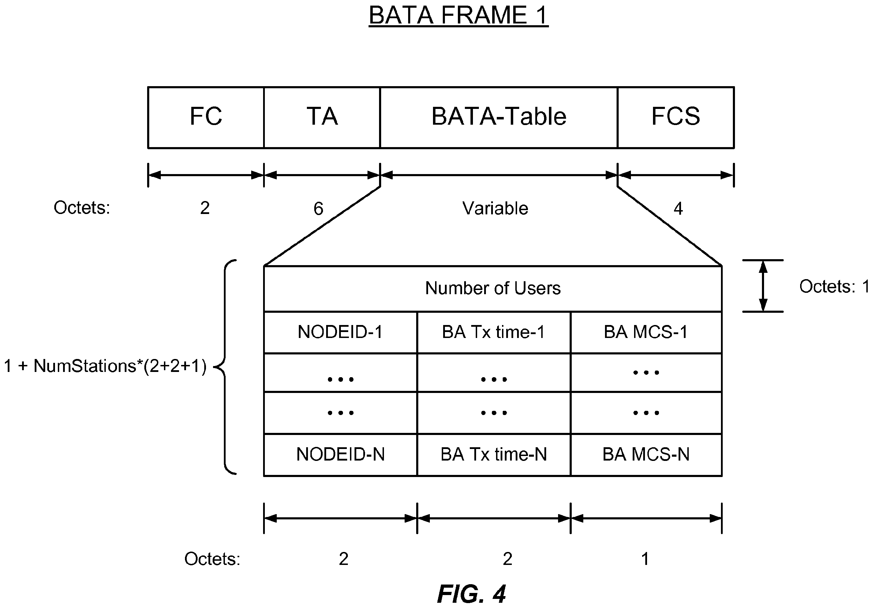

By way of example, as shown in FIGS. 3 and 4, in one configuration of a wireless network utilizing TDMA, the BATA includes a schedule of transmission times for each of the receiving nodes (ATs 101-110) to send its respective BA to the transmitting node (AP 100). This schedule may be referred to as a Block ACK Time Assignment. In FIGS. 3 and 4, and with reference to FIG. 2, the aggregate PHY layer packet (or APPDU) 240 includes a BATA frame 1 (BATA1) in a first PHY packet (or PPDU) 226a thereof, following the single preamble 228 of the APPDU 240. As shown in FIG. 4, the BATA frame 1 includes a frame control field (FC), a transmission address field (TA) including the address of the AP 100, a BATA-table, and a frame check sequence (FCS), which may be a cyclic redundancy check for verifying transmission of the frame. The BATA-table includes a number of users (receiving nodes), a node identification (NodeID) field identifying each receiving node with a unique NodeID, a BA transmit (Tx) time including a unique BA transmission time for each receiving node identified in the NodeID field (e.g., NodeID-1-NodeID-N), and a BA MCS for each of the receiving nodes (e.g., NodeID-1-NodeID-N). The BA MCS refers to the lowest modulation and coding scheme (MCS) level that allows each node to decode correctly. Since the MCS may be different for each node, the BA MCS may be the same for all of the nodes according to the minimum MCS level of all of the nodes, or may be determined for each node individually according to the minimum MCS level for each individual node. For simplicity, it is assumed that in FIG. 4, N=10, and each of the receiving nodes (NodeID-1-NodeID-10) corresponds, respectively, to one of ATs 101-110 of FIG. 3.

Referring again to FIG. 3, the BATA frame 1 carried in the first PPDU 226a of the APPDU 240 is preceded by a header 230a directed to the BATA1. The header 230a may include a designation indicating a data rate for transmission of the BATA1. The BATA1 may be transmitted to each receiving node at the minimum MCS level of all the nodes, to ensure proper decoding of the BATA1 by each receiving node. In response to the BATA1, each receiving node automatically sends a BA back to the transmitting node AP 100 at its scheduled time. As indicated in FIG. 3, the BAs are sent sequentially and may include a Short Inter-frame Space (SIFS) there between. Thus, in some aspects, the BA Tx time for a first node AT 101 may be scheduled to be immediately following an offset from the end of the downlink phase. Then, the scheduled BA Tx time for a second node AT 102 may be SIFS + BA Tx time for AT101 + SIFS. The scheduled BA Tx time for a third node AT 103 may be SIFS + BA Tx time for AT102 + SIFS, etc. By including the BATA1 in the aggregate PHY layer packet (or APPDU) 240, it is not necessary for the transmitting node to send a separate BAR to each receiving node, thereby reducing overhead and transmission time, and eliminating inter-frame spacing between BARs and BAs, that might otherwise be required.

In some aspects, the wireless network 100 of FIG. 1 utilizes Orthogonal Frequency Division Multiple Access (OFDMA). OFDMA utilizes orthogonal frequency division multiplexing (OFDM). OFDM is a spread-spectrum technique that distributes data from each user (or node) over a number of tones, or subcarriers, equally spaced apart at precise frequencies such that each tone is orthogonal to each other tone in the spectrum. An OFDM system takes a high rate data stream and splits it into N parallel, lower-rate streams, each at a rate 1/N of the original rate. Each stream is then mapped to a tone, or subcarrier, at a unique frequency and combined together using an Inverse Fast Fourier Transform (IFFT) to yield a time-domain waveform to be transmitted. In an OFDMA system, each user is provided with a subset of the available tones (hereinafter, a tone set) for transmission of information.

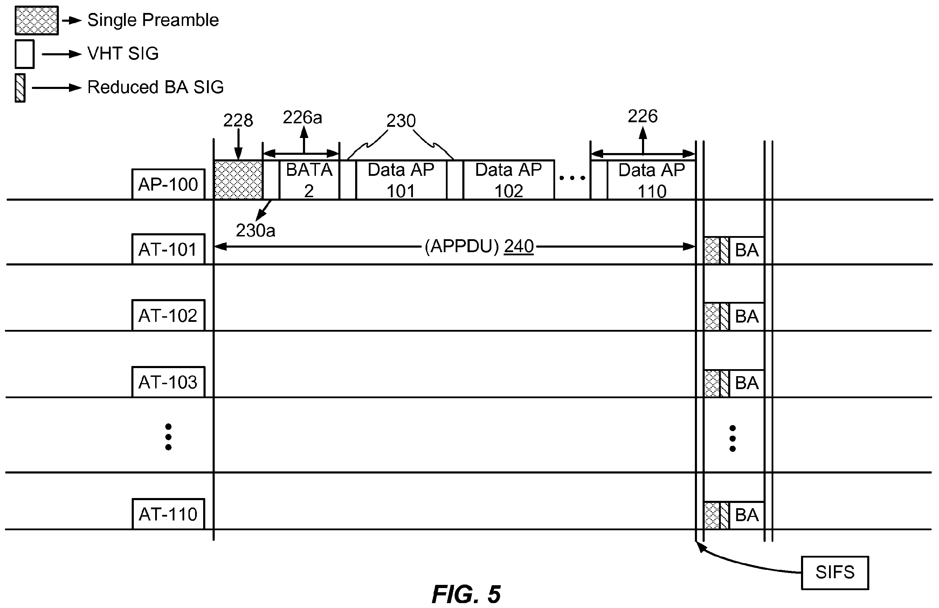

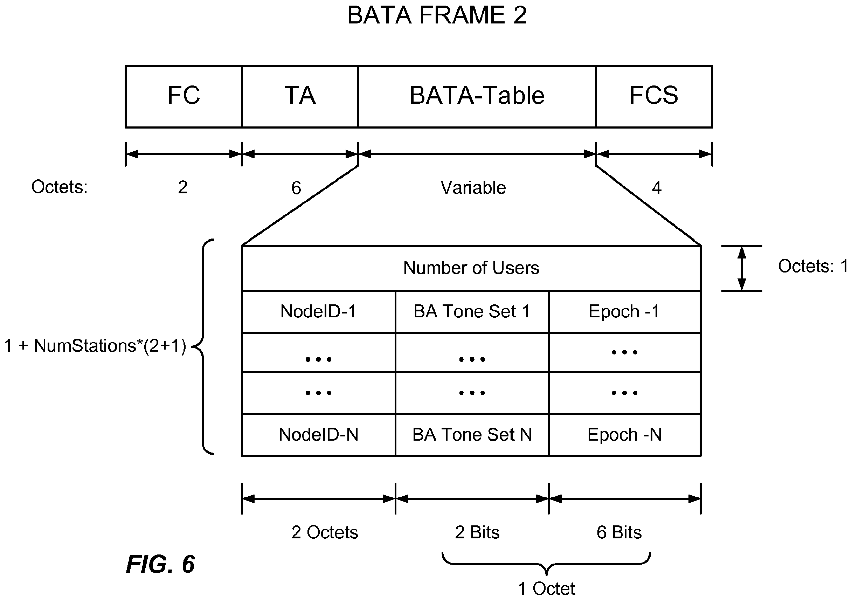

As shown, by way of example, in FIGS. 5 and 6, in one configuration of a wireless network utilizing OFDMA, the BATA includes a schedule of tone set allocations and epoch(s) for each of the receiving nodes (ATs 101-110) to send its respective BA to the transmitting node (AP 100). This schedule may be referred to as a Block ACK Tone Assignment. In FIGS. 5 and 6, and with reference to FIG. 2, the aggregate PHY layer packet (or APPDU) 240 includes a BATA frame 2 (BATA2) in a first PHY packet (or PPDU) 226a thereof, following the single preamble 228 of the APPDU 240. As shown in FIG. 6, the BATA frame 2 includes a frame control field (FC), a transmission address field (TA) including the address of the AP 100, a BATA-table, and a frame check sequence (FCS), which may be a cyclic redundancy check for verifying transmission of the frame. The BATA-table includes a number of users (receiving nodes), a node identification (NodeID) field identifying each receiving node with a unique NodeID, a BA Tone Set field including a tone set or frequency allocation for each of the receiving nodes identified in the NodeID field (i.e., NodeID-1-NodeID-N) to send its respective BA to the AP 100, and an Epoch field including an epoch, i.e., a time period or duration, during which each receiving node is scheduled to send its BA. The tone set for each receiving node may be derived, for example, by using a hash function of each NodeID. For simplicity, it is assumed that in FIG. 6, N=10, and each of the receiving nodes (NodeID-1-NodeID-10) corresponds, respectively, to one of ATs 101-110 of FIG. 5.

In the example shown in FIGS. 5 and 6, if there are enough tone sets for each of the receiving nodes, then the Epochs (Epoch-1-Epoch-10) in FIG. 6 are all the same. If all of the Epochs (Epoch-1-Epoch-10) are the same, then, as shown in FIG. 5, each receiving node sends its respective BA simultaneously over the tone set or frequency allocated to that node. If, however, there are only enough tone sets for 6 of 10 of the receiving nodes, for example, then NodeID-1-NodeID-6 may be allocated Tone Sets 1-6 and Epoch - 1, while NodeID-7-NodeID-10 may be allocated Tones Sets 1-4 and Epoch - 2. In such a case, each of receiving nodes 1-6 (ATs 101-106 in FIG. 6) sends its respective BA simultaneously during epoch 1, and each of receiving nodes 7-10 (ATs 107-110 in FIG. 6) sends its respective BA simultaneously during epoch 2. In such a case, the longest time to receive a BA is SIFS + Epoch 1 + SIFS + Epoch 2.

The above example, in which the BAs are sent simultaneously via available tone sets or frequencies for each receiving node in a single epoch may be applied to any downlink modulation scheme, such as TDMA, SDMA and/or OFDMA.

In some aspects, the wireless network 100 of FIG. 1 may support MIMO technology with SDMA such that an access point may communicate with multiple access terminals simultaneously via multiple spatial streams.

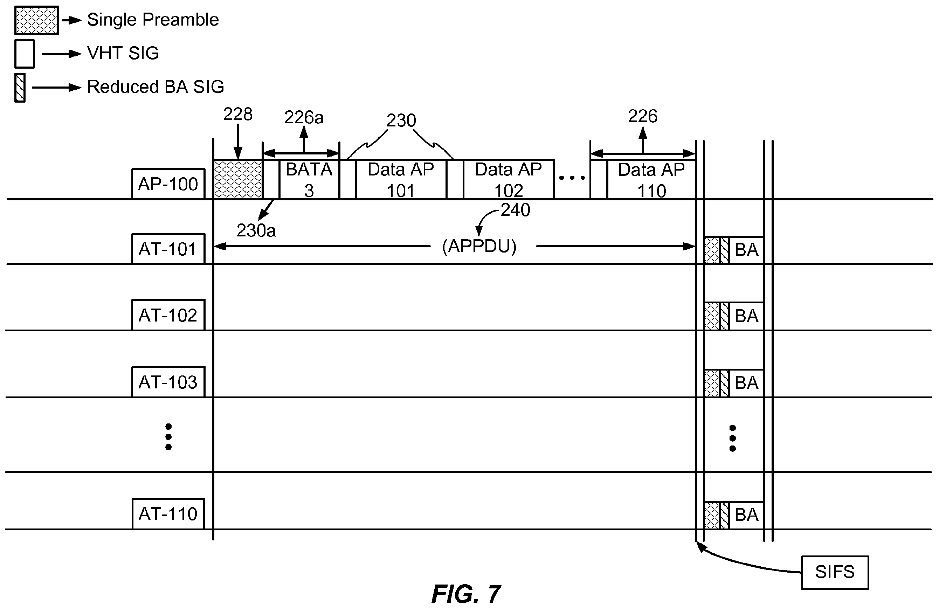

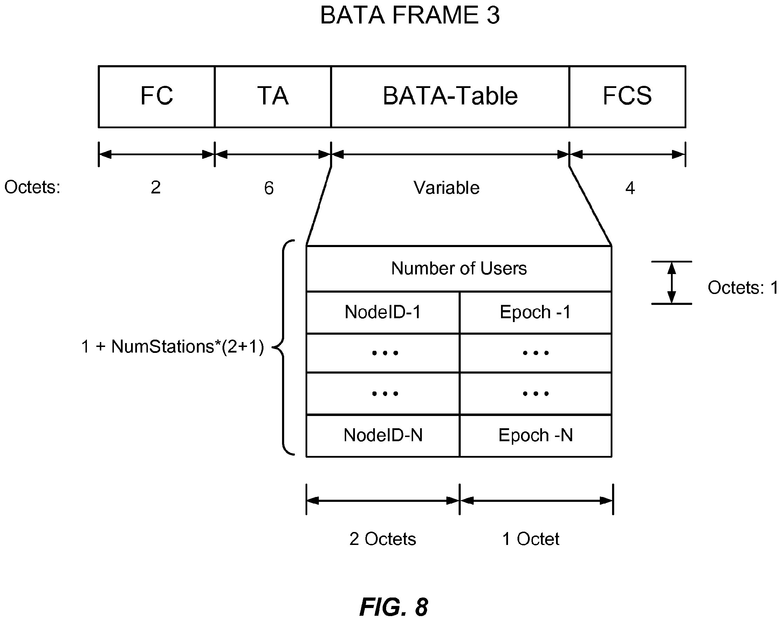

FIGS. 7 and 8 illustrate an example of one configuration of a wireless network utilizing SDMA. As shown in FIGS. 7 and 8, and with reference to FIG. 2, the aggregate PHY layer packet (or APPDU) 240 includes a BATA frame 3 (BATA3) in a first PHY packet (or PPDU) 226a thereof, following the single preamble 228 of the APPDU 240. The BATA frame 3 includes a schedule of epoch(s) for each of the receiving nodes (ATs 101-110) to send back its respective BA over its respective spatial stream to the transmitting node (AP 100). As shown in FIG. 8, the BATA frame 3 includes a frame control field (FC), a transmission address field (TA) including the address of the AP 100, a BATA-table, and a frame check sequence (FCS), which may be a cyclic redundancy check for verifying transmission of the frame. The BATA-table includes a number of users (receiving nodes), a node identification (NodeID) field identifying each receiving node with a unique NodeID, and an Epoch field including an epoch, i.e., a time period or duration, during which each of the receiving nodes identified in the NodeID field (i.e., NodeID-1--NodeID-N) is scheduled to send its respective BA over its respective spatial stream to the AP 100.

Referring again to FIG. 7, the BATA frame 3 (BATA3) carried in the first PPDU 226a of the APPDU 240 is preceded by a header 230a directed to the BATA3. The header 230a may include a designation indicating a data rate for transmission of the BATA3. The BATA3 may be transmitted to each receiving node at the minimum MCS level of all the nodes, to ensure proper decoding of the BATA3 by each receiving node. In response to the BATA3, each receiving node automatically sends a BA back to the transmitting node AP 100 during the epoch assigned thereto. It should be noted that as in the example of FIGS. 3 and 4, this the transmission rate for the BATA3 also applies to the BATA2 in the example of FIGS. 5 and 6.

In the example shown in FIGS. 7 and 8, if the AP 100 has N antennas, i.e., N spatial streams, each receiving node 1-N can send its respective BA back to the AP 100 simultaneously, via one of the N uplink spatial streams, respectively, as shown in FIG. 7 when N=10 and each of the receiving nodes (NodeID-1-NodeID-10) of FIG. 8 corresponds to one of the ATs 101-110 of FIG. 7. In such a case, each epoch (Epoch-1-Epoch-N) is the same for all of the receiving nodes 1-N.

In the following example, it is assumed that in FIG. 8, N=10, and each of the receiving nodes (NodeID-1-NodeID-10) corresponds, respectively, to one of ATs 101-110 of FIG. 7. Under the foregoing assumption, in a case in which the AP 100 has, for example, 8 antennas, i.e., 8 spatial streams, over which the APPDU 240 is transmitted to the 10 receiving nodes, there are only 8 uplink spatial streams for sending BAs back to the AP 100. In such a case, NodeIDs-1-8 (ATs 101-108 of FIG. 7) may be assigned Epoch-1 during which to send their respective BAs back to the AP 100 over one of the 8 spatial streams, respectively. NodeIDs-9-10 would be assigned Epoch-2 during which to send their respective BAs back to the AP 100 over one of two of the 8 spatial streams, respectively.

In the BATA table shown in FIG. 8, the minimum MCS for all of the receiving nodes is assumed. However, the BATA table may further include a BA MCS field, which includes the minimum MCS for each node individually.

FIG. 9 is a conceptual block diagram illustrating an example of the signal processing functions of the PHY layer. In a transmit mode, a TX data processor 902 may be used to receive data from the MAC layer and encode (e.g., Turbo code) the data to facilitate forward error correction (FEC) at the receiving node. The encoding process results in a sequence of code symbols that that may be blocked together and mapped to a signal constellation by the TX data processor 902 to produce a sequence of modulation symbols.

In wireless nodes implementing OFDM, the modulation symbols from the TX data processor 902 may be provided to an OFDM modulator 904. The OFDM modulator splits the modulation symbols into parallel streams. Each stream is then mapped to an OFDM subcarrier and then combined together using an Inverse Fast Fourier Transform (IFFT) to produce a time domain OFDM stream.

A TX spatial processor 906 performs spatial processing on the OFDM stream. This may be accomplished by spatially precoding each OFDM and then providing each spatially precoded stream to a different antenna 908 via a transceiver 906. Each transmitter 906 modulates an RF carrier with a respective precoded stream for transmission over the wireless channel.

In a receive mode, each transceiver 906 receives a signal through its respective antenna 908. Each transceiver 906 may be used to recover the information modulated onto an RF carrier and provide the information to a RX spatial processor 910.

The RX spatial processor 910 performs spatial processing on the information to recover any spatial streams destined for the wireless node 900. The spatial processing may be performed in accordance with Channel Correlation Matrix Inversion (CCMI), Minimum Mean Square Error (MMSE), Soft Interference Cancellation (SIC), or some other suitable technique. If multiple spatial streams are destined for the wireless node 900, they may be combined by the RX spatial processor 910.

In wireless nodes implementing OFDM, the stream (or combined stream) from the RX spatial processor 910 is provided to an OFDM demodulator 912. The OFDM demodulator 912 converts the stream (or combined stream) from time-domain to the frequency domain using a Fast Fourier Transform (FFT). The frequency domain signal comprises a separate stream for each subcarrier of the OFDM signal. The OFDM demodulator 912 recovers the data (i.e., modulation symbols) carried on each subcarrier and multiplexes the data into a stream of modulation symbols.

A RX data processor 914 may be used to translate the modulation symbols back to the correct point in the signal constellation. Because of noise and other disturbances in the wireless channel, the modulation symbols may not correspond to an exact location of a point in the original signal constellation. The RX data processor 914 detects which modulation symbol was most likely transmitted by finding the smallest distance between the received point and the location of a valid symbol in the signal constellation. These soft decisions may be used, in the case of Turbo codes, for example, to compute a Log-Likelihood Ratio (LLR) of the code symbols associated with the given modulation symbols. The RX data processor 914 then uses the sequence of code symbol LLRs in order to decode the data that was originally transmitted before providing the data to the MAC layer.

FIG. 10 is a conceptual diagram illustrating an example of a hardware configuration for a processing system in a wireless node. In this example, the processing system 1000 may be implemented with a bus architecture represented generally by bus 1002. The bus 1002 may include any number of interconnecting buses and bridges depending on the specific application of the processing system 1000 and the overall design constraints. The bus links together various circuits including a processor 1004, machine-readable media 1006, and a bus interface 1008. The bus interface 1008 may be used to connect a network adapter 1010, among other things, to the processing system 1000 via the bus 1002. The network adapter 1010 may be used to implement the signal processing functions of the PHY layer. In the case of an access terminal 110 (see FIG. 1), a user interface 1012 (e.g., keypad, display, mouse, joystick, etc.) may also be connected to the bus. The bus 1002 may also link various other circuits such as timing sources, peripherals, voltage regulators, power management circuits, and the like, which are well known in the art, and therefore, will not be described any further.

The processor 1004 is responsible for managing the bus and general processing, including the execution of software stored on the machine-readable media 1006. The processor 1004 may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product. The computer-program product may comprise packaging materials.

In the hardware implementation illustrated in FIG. 10, the machine-readable media 1006 is shown as part of the processing system 1000 separate from the processor 1004. However, as those skilled in the art will readily appreciate, the machine-readable media 1006, or any portion thereof, may be external to the processing system 1000. By way of example, the machine-readable media 1006 may include a transmission line, a carrier wave modulated by data, and/or a computer product separate from the wireless node, all which may be accessed by the processor 1004 through the bus interface 1008. Alternatively, or in addition to, the machine readable media 1006, or any portion thereof, may be integrated into the processor 1004, such as the case may be with cache and/or general register files.

The processing system 1000 may be configured as a general-purpose processing system with one or more microprocessors providing the processor functionality and external memory providing at least a portion of the machine-readable media 1006, all linked together with other supporting circuitry through an external bus architecture. Alternatively, the processing system 1000 may be implemented with an ASIC (Application Specific Integrated Circuit) with the processor 1004, the bus interface 1008, the user interface 1012 in the case of an access terminal), supporting circuitry (not shown), and at least a portion of the machine-readable media 1006 integrated into a single chip, or with one or more FPGAs (Field Programmable Gate Array), PLDs (Programmable Logic Device), controllers, state machines, gated logic, discrete hardware components, or any other suitable circuitry, or any combination of circuits that can perform the various functionality described throughout this disclosure. Those skilled in the art will recognize how best to implement the described functionality for the processing system 1000 depending on the particular application and the overall design constraints imposed on the overall system.

The machine-readable media 1006 is shown with a number of software modules. The software modules include instructions that when executed by the processor 1004 cause the processing system 1000 to perform various functions. The software modules include a transmission module 1100 and a receiving module 1200. Each software module may reside in a single storage device or distributed across multiple storage devices. By way of example, a software module may be loaded into RAM from a hard drive when a triggering event occurs. During execution of the software module, the processor 1004 may load some of the instructions into cache to increase access speed. One or more cache lines may then be loaded into a general register file for execution by the processor 1004. When referring to the functionality of a software module below, it will be understood that such functionality is implemented by the processor 1004 when executing instructions from that software module.

FIG. 11 is a flow chart illustrating an example of the functionality of the transmission module 1100. In step 1102, the transmission module 1100 may be used to generate a physical layer packet such as an aggregate PLCP PDU (APPDU) physical layer packet (see FIG. 2). In step 1104, the transmission module 1100 may be used to generate a Block ACK Transmission Allocation (BATA) schedule based on a modulation scheme used in the uplink from each of a plurality of receiving nodes. In step 1106, the transmission module 1100 may be used to generate a BATA frame including the BATA schedule generated in step 1104. In some aspects, in step 1108, the transmission module 1100 may be used to determine a lowest MCS level for each of a plurality of receiving nodes to determine a transmit rate for the BATA frame. For example, the transmission module 1100 may transmit the BATA frame at the lowest transmit rate by which it is possible to ensure correct decoding of the BATA by each one of the plurality of receiving nodes. In step 1110, the transmission module 1100 may append a header to the BATA frame and add the BATA frame including header (see, e.g., FIGS. 3, 5, and 7) as the first PPDU in the APPDU. The header may include transmission rate information for the BATA, such as determined in step 1108. In step 1112, the transmission module transmits the APPDU including the BATA frame to the plurality of receiving nodes.

FIG. 12 is a flow chart illustrating an example of the functionality of the receiving module 1200. As shown in step 1202, the receiving module 1200 may receive, from a transmitting node, a physical layer packet for transmission to a plurality of nodes. In step 1204, the receiving module 1200 may generate an acknowledgement for each of the nodes to send to the transmitting node based on a transmission schedule included in the physical layer packet.

Fig. 13 is a block diagram illustrating an example of the functionality of an apparatus for communication 1300 according an aspect of the disclosure. The apparatus includes a processing system having a physical layer packet generation module 1302 for generating a physical layer packet for transmission to a plurality of nodes, the physical layer packet including a resource allocation for each of the plurality of nodes to send an acknowledgement to the apparatus; and a physical layer packet transmission module 1304 for transmitting the physical layer packet.

Fig. 14 is a block diagram illustrating an example of the functionality of an apparatus for communication 1400 according another aspect of the disclosure. The apparatus includes a processing system having a physical layer packet reception module 1402 for receiving a physical layer packet transmitted by a node to a plurality of other nodes, the physical layer packet comprising a resource allocation for each of the plurality of other nodes to acknowledge receipt of the physical layer packet to the node; an acknowledgement packet transmission module 1404 for generating an acknowledgement packet in response to the receipt of the physical layer packet; and an acknowledgement packet transmission module 1406 for transmitting the acknowledgement packet to the node based on the resource allocation .

It is understood that any specific order or hierarchy of steps described in the context of a software module is being presented to provide an example of a wireless node. Based upon design preferences, it is understood that the specific order or hierarchy of steps may be rearranged while remaining within the scope of the disclosure.

Although various aspects of the disclosure have been described as software implementations, those skilled in the art will readily appreciate that the various software modules presented throughout this disclosure may be implemented in hardware, or any combination of software and hardware. Whether these aspects are implemented in hardware or software depends upon the particular application and design constraints imposed on the overall system. Skilled artisans may implement the described functionality in varying ways for each particular application, but such implementation decisions should not be interpreted as causing a departure from the scope of the disclosure.

## Claims

1. A method for communication by an apparatus, comprising:
generating (1102) an aggregate physical layer, PHY, packet (240) comprising a plurality PHY packets (226) for transmission to a plurality of nodes (120), wherein the first PHY packet of the plurality of PHY packets (226a) comprises a Block Acknowledgement, ACK, Transmission Allocation, BATA, frame comprising a resource allocation for each of the plurality of nodes (120) to send an acknowledgement to the apparatus (110), wherein the resource allocation comprises a data rate for each of the plurality of nodes to send its respective acknowledgement to the apparatus;
wherein the data rate is the same for each of the plurality of nodes (120) and corresponds to a lowest reliable data rate amongst all nodes of the plurality of nodes (120), or
wherein, for each one of the plurality of nodes (120), the data rate is the lowest reliable data rate for that one of the plurality of nodes (120); and
transmitting (1112) the aggregate physical layer packet (240).

2. An apparatus (1300) for communication, comprising:
means for generating (1302) an aggregate physical layer, PHY, packet (240) comprising a plurality PHY packets (226) for transmission to a plurality of nodes (120), wherein the first PHY packet (226a) of the plurality of PHY packets (226) comprises a Block Acknowledgement, ACK, Transmission Allocation, BATA, frame comprising a resource allocation for each of the plurality of nodes (120) to send an acknowledgement to the apparatus (1300), wherein the resource allocation comprises a data rate for each of the plurality of nodes to send its respective acknowledgement to the apparatus;
wherein the data rate is the same for each of the plurality of nodes (120) and corresponds to a lowest reliable data rate amongst all nodes of the plurality of nodes (120), or
wherein, for each one of the plurality of nodes (120), the data rate is the lowest reliable data rate for that one of the plurality of nodes (120); and
means for transmitting (1304) the aggregate physical layer packet (240).

3. The apparatus (1300) of claim 2 or the method of claim 1, wherein the resource allocation comprises an identifier for each of the plurality of nodes (120).

4. The apparatus (1300) of claim 2 or the method of claim 1, wherein the resource allocation comprises a transmission time for each of the plurality of nodes (120) to send its respective acknowledgement to the apparatus.

5. The apparatus (1300) of claim 2 or the method of claim 1, wherein the resource allocation comprises a tone allocation for each of the plurality of nodes (120) to send its respective acknowledgement to the apparatus, wherein the resource allocation further comprises a time period for each of the plurality of nodes (120) to send its respective acknowledgement to the apparatus, wherein the time period is the same for at least two nodes of the plurality of nodes (120) to send their respective acknowledgements to the apparatus simultaneously.

6. The apparatus (1300) of claim 2 or the method of claim 1, wherein the resource allocation comprises a spatial stream allocation for each of the plurality of nodes to send its respective acknowledgment to the apparatus wherein the resource allocation further comprises a time period for each of the plurality of nodes (120) to send its respective acknowledgement to the apparatus wherein the time period is the same for at least two of the plurality of nodes (120).

7. A method for communication by an apparatus, comprising:
receiving (1202) an aggregate physical layer, PHY, packet (240) comprising plurality of PHY packets (226) transmitted by a node (110) to a plurality of other nodes (120), wherein the first PHY packet (226a) of the plurality of PHY packets (226) comprises a Block Acknowledgement, ACK, Transmission Allocation, BATA, frame comprising a resource allocation for each of the plurality of other nodes (120) including the apparatus to acknowledge receipt of the aggregate physical layer packet (240) to the node (110), wherein the resource allocation comprises a data rate for each of the plurality of other nodes (120) to send its respective acknowledgement packet to the node;
wherein the data rate is the same for each of the plurality of nodes (120) and corresponds to a lowest reliable data rate amongst all nodes of the plurality of nodes (120), or
wherein, for each one of the plurality of nodes (120), the data rate is the lowest reliable data rate for that one of the plurality of nodes (120);
generating (1204) an acknowledgement packet in response to the receipt of the aggregate physical layer packet (240); and
transmitting the acknowledgement packet to the node (110) based on the resource allocation.

8. An apparatus (1400) for communication, comprising:
means for receiving (1402) an aggregate physical layer, PHY, packet (240) comprising plurality of PHY packets (226a) transmitted by a node (110) to a plurality of other nodes (120) including the apparatus, wherein the first PHY packet (226a) of the plurality of PHY packets (226) comprises a Block Acknowledgement, ACK, Transmission Allocation, BATA, frame comprising a resource allocation for each of the plurality of other nodes (120) to acknowledge receipt of the aggregate physical layer packet (240) to the node (110), wherein the resource allocation comprises a data rate for each of the plurality of other nodes (120) to send its respective acknowledgement packet to the node;
wherein the data rate is the same for each of the plurality of other nodes (120) and corresponds to a lowest reliable data rate amongst all nodes of the plurality of other nodes, or
wherein, for each one of the plurality of other nodes (120), the data rate is the lowest reliable data rate for that one of the plurality of other nodes (120);
means for generating (1404) an acknowledgement packet in response to the receipt of the aggregate physical layer packet (240); and
means for transmitting (1406) the acknowledgement packet to the node (110) based on the resource allocation.

9. The apparatus (1400) of claim 8 or the method of claim 7, wherein the resource allocation comprises an identifier for each of the plurality of other nodes (120).

10. The apparatus (1400) of claim 8 or the method of claim 7, wherein the resource allocation comprises a transmission time for each of the plurality of other nodes (120) to send its respective acknowledgement packet to the apparatus.

11. The apparatus (1400) of claim 8 or the method of claim 7, wherein the resource allocation comprises a tone allocation for each of the plurality of other nodes (120) to send its respective acknowledgement packet to the node (110) wherein the resource allocation further comprises a time period for each of the plurality of other nodes to send its respective acknowledgement packet to the node wherein the time period is the same for at least two nodes of the plurality of other nodes (120) to send their respective acknowledgement packets to the apparatus simultaneously.

12. The apparatus (1400) of claim 8 or the method of claim 7, wherein the resource allocation comprises a spatial stream allocation for each of the plurality of other nodes (120) to send its respective acknowledgment packet to the node (110) wherein the resource allocation further comprises a time period for each of the plurality of other nodes (120) to send its respective acknowledgement packet to the node (110) wherein the time period is the same for at least two of the plurality of other nodes (120).

13. A computer-program product for communication, comprising:
a machine-readable medium (1006) comprising instructions, which when executed by a computer, cause said computer to execute the method of any one of claims 1, and 3 to 6 or 7, and 9 to 12.

## Patentansprüche

1. Ein Verfahren zur Kommunikation durch eine Vorrichtung, das Folgendes aufweist:
Generieren (1102) eines aggregierten Pakets (240) einer physischen Schicht bzw. eines aggregierten PHY-Pakets (PHY = physical layer), das eine Vielzahl von PHY-Paketen (226) zur Sendung an eine Vielzahl von Knoten (120) aufweist, wobei das erste PHY-Paket der Vielzahl von PHY-Paketen (226a) einen Blockbestätigungssendezuteilungs- bzw. BATA-Rahmen (BATA = Block Acknowledgement Transmission Allocation) aufweist, der eine Ressourcenzuteilung für jeden der Vielzahl von Knoten (120) aufweist zum Senden einer Bestätigung an die Vorrichtung (110), wobei die Ressourcenzuteilung eine Datenrate für jeden der Vielzahl von Knoten aufweist zum Senden seiner entsprechenden Bestätigung an die Vorrichtung;
wobei die Datenrate die gleiche für jeden der Vielzahl von Knoten (120) ist und einer niedrigsten zuverlässigen Datenrate von allen Knoten der Vielzahl von Knoten (120) entspricht, oder
wobei für jeden der Vielzahl von Knoten (120) die Datenrate die niedrigste zuverlässige Datenrate für diesen einen der Vielzahl von Knoten (120) ist; und
Senden (1112) des aggregierten Pakets (240) der physischen Schicht.

2. Eine Vorrichtung (1300) zur Kommunikation, die Folgendes aufweist:
Mittel zum Generieren (1302) eines aggregierten PHY-Pakets (PHY = physical layer bzw. physische Schicht) (240), das eine Vielzahl von PHY-Paketen (226) zur Sendung an eine Vielzahl von Knoten (120) aufweist, wobei das erste PHY-Paket (226a) der Vielzahl von PHY-Paketen (226) einen Blockbestätigungssendezuteilungs- bzw. BATA-Rahmen (BATA = Block Acknowledgement Transmission Allocation) aufweist, der eine Ressourcenzuteilung für jeden der Vielzahl von Knoten (120) aufweist zum Senden einer Bestätigung an die Vorrichtung (1300), wobei die Ressourcenzuteilung eine Datenrate für jeden der Vielzahl von Knoten aufweist zum Senden seiner entsprechenden Bestätigung an die Vorrichtung;
wobei die Datenrate die gleiche für jeden der Vielzahl von Knoten (120) ist und einer niedrigsten zuverlässigen Datenrate von allen Knoten der Vielzahl von Knoten (120) entspricht, oder
wobei für jeden der Vielzahl von Knoten (120) die Datenrate die niedrigste zuverlässige Datenrate für diesen einen der Vielzahl von Knoten (120) ist; und
Mittel zum Senden (1304) des aggregierten Pakets (240) der physischen Schicht.

3. Vorrichtung (1300) nach Anspruch 2 oder Verfahren nach Anspruch 1, wobei die Ressourcenzuteilung einen Identifikator für jeden der Vielzahl von Knoten (120) aufweist.

4. Vorrichtung (1300) nach Anspruch 2 oder Verfahren nach Anspruch 1, wobei die Ressourcenzuteilung eine Sendezeit für jeden der Vielzahl von Knoten (120) zum Senden seiner entsprechenden Bestätigung an die Vorrichtung aufweist.

5. Vorrichtung (1300) nach Anspruch 2 oder Verfahren nach Anspruch 1, wobei die Ressourcenzuteilung eine Tonzuteilung für jeden der Vielzahl von Knoten (120) zum Senden seiner entsprechenden Bestätigung an die Vorrichtung aufweist, wobei die Ressourcenzuteilung weiter eine Zeitperiode für jeden der Vielzahl von Knoten (120) zum Senden seiner entsprechenden Bestätigung an die Vorrichtung aufweist, wobei die Zeitperiode die gleiche für wenigstens zwei Knoten der Vielzahl von Knoten (120) zum gleichzeitigen Senden ihrer entsprechenden Bestätigungen an die Vorrichtung ist.

6. Vorrichtung (1300) nach Anspruch 2 oder Verfahren nach Anspruch 1, wobei die Ressourcenzuteilung eine Zuteilung eines räumlichen Stroms für jeden der Vielzahl von Knoten zum Senden seiner entsprechenden Bestätigung an die Vorrichtung aufweist, wobei die Ressourcenzuteilung weiter eine Zeitperiode für jeden der Vielzahl von Knoten (120) zum Senden seiner entsprechenden Bestätigung an die Vorrichtung aufweist, wobei die Zeitperiode die gleiche für wenigstens zwei der Vielzahl von Knoten (120) ist.

7. Ein Verfahren zur Kommunikation durch eine Vorrichtung, das Folgendes aufweist:
Empfangen (1202) eines aggregierten Pakets (240) einer physischen Schicht bzw. eines aggregierten PHY-Pakets (PHY = physical layer), das eine Vielzahl von PHY-Paketen (226) aufweist, die durch einen Knoten (110) an eine Vielzahl von anderen Knoten (120) gesendet werden, wobei das erste PHY-Paket (226a) der Vielzahl von PHY-Paketen (226) einen Blockbestätigungssendezuteilungs- bzw. BATA-Rahmen (BATA = Block Acknowledgement Transmission Allocation) aufweist, der eine Ressourcenzuteilung für jeden der Vielzahl von anderen Knoten (120) aufweist, **einschließlich** der Vorrichtung, zum Bestätigen eines Empfangs des aggregierten Pakets (240) der physischen Schicht **gegenüber** dem Knoten (110), wobei die Ressourcenzuteilung eine Datenrate für jeden der Vielzahl von anderen Knoten (120) zum Senden seines jeweiligen Bestätigungspakets an den Knoten aufweist;
wobei die Datenrate die gleiche für jeden der Vielzahl von Knoten (120) ist und einer niedrigsten zuverlässigen Datenrate von allen Knoten der Vielzahl von Knoten (120) entspricht, oder
wobei für jeden der Vielzahl von Knoten (120) die Datenrate die niedrigste verfügbare Datenrate für diesen einen der Vielzahl von Knoten (120) ist;
Generieren (1204) eines Bestätigungspakets ansprechend auf den Empfang des aggregierten Pakets (240) der physischen Schicht; und
Senden des Bestätigungspakets an den Knoten (110) basierend auf der Ressourcenzuteilung.

8. Eine Vorrichtung (1400) zur Kommunikation, die Folgendes aufweist:
Mittel zum Empfangen (1402) eines aggregierten Pakets (240) einer physischen Schicht bzw. eines aggregierten PHY-Pakets (PHY = physical layer), das eine Vielzahl von PHY-Paketen (226a) aufweist, die durch einen Knoten (110) an eine Vielzahl von anderen Knoten (120), **einschließlich** der Vorrichtung, gesendet werden, wobei das erste PHY-Paket (226a) der Vielzahl von PHY-Paketen (226) einen Blockbestätigungssendezuteilungs- bzw. BATA-Rahmen (BATA = Block Acknowledgement Transmission Allocation) aufweist, der eine Ressourcenzuteilung für jeden der Vielzahl von anderen Knoten (120) aufweist zum Bestätigen eines Empfangs des aggregierten Pakets (240) der physischen Schicht **gegenüber** dem Knoten (110), wobei die Ressourcenzuteilung eine Datenrate für jeden der Vielzahl von anderen Knoten (120) zum Senden seines jeweiligen Bestätigungspakets an den Knoten aufweist;
wobei die Datenrate die gleiche für jeden der Vielzahl von anderen Knoten (120) ist und einer niedrigsten zuverlässigen Datenrate von allen Knoten der Vielzahl von Knoten (120) entspricht, oder
wobei für jeden der Vielzahl von anderen Knoten (120) die Datenrate die niedrigste verfügbare Datenrate für diesen einen der Vielzahl von anderen Knoten (120) ist;
Mittel zum Generieren (1404) eines Bestätigungspakets ansprechend auf den Empfang des aggregierten Pakets (240) der physischen Schicht; und
Mittel zum Senden (1406) des Bestätigungspakets an den Knoten (110) basierend auf der Ressourcenzuteilung.

9. Mittel (1400) nach Anspruch 8 oder Verfahren nach Anspruch 7, wobei die Ressourcenzuteilung einen Identifikator für jeden der Vielzahl von anderen Knoten (120) aufweist.

10. Vorrichtung (1400) nach Anspruch 8 oder Verfahren nach Anspruch 7, wobei die Ressourcenzuteilung eine Sendezeit für jeden der Vielzahl von anderen Knoten (120) zum Senden seines entsprechenden Bestätigungspakets an die Vorrichtung aufweist.

11. Vorrichtung (1400) nach Anspruch 8 oder Verfahren nach Anspruch 7, wobei die Ressourcenzuteilung eine Tonallokation für jeden der Vielzahl von anderen Knoten (120) zum Senden seines entsprechenden Bestätigungspakets an den Knoten (110) aufweist, wobei die Ressourcenzuteilung weiter eine Zeitperiode für jeden der Vielzahl von anderen Knoten zum Senden seines entsprechenden Bestätigungspakets an den Knoten aufweist, wobei die Zeitperiode die gleiche für wenigstens zwei Knoten der Vielzahl von anderen Knoten (120) zum gleichzeitigen Senden ihrer entsprechenden Bestätigungspakete an die Vorrichtung ist.

12. Vorrichtung (1400) nach Anspruch 8 oder Verfahren nach Anspruch 7, wobei die Ressourcenzuteilung eine Zuteilung eines räumlichen Stroms für jeden der Vielzahl von anderen Knoten (120) zum Senden ihres entsprechenden Bestätigungspakets an den Knoten (110) aufweist, wobei die Ressourcenzuteilung weiter eine Zeitperiode für jeden der Vielzahl von anderen Knoten (120) zum Senden seines entsprechenden Bestätigungspakets an den Knoten (110) aufweist, wobei die Zeitperiode die gleiche für wenigstens zwei der Vielzahl von anderen Knoten (120) ist.

13. Ein Computerprogrammprodukt zur Kommunikation, das Folgendes aufweist: ein maschinenlesbares Medium (1006), das Instruktionen aufweist, die, wenn sie durch einen Computer ausgeführt werden, den Computer veranlassen zum Ausführen des Verfahrens nach einem der Ansprüche 1 und 3 bis 6 oder 7 und 9 bis 12.

## Revendications

1. Procédé de communication par un dispositif, comprenant :
générer (1102) un paquet de couche physique agrégé, PHY, (240) comprenant une pluralité de paquets PHY (226) pour transmission à une pluralité de noeuds (120), le premier paquet PHY de la pluralité de paquets PHY (226a) comprenant une trame d'Allocation de Transmission d'Accusé de Réception de Bloc, ACK, BATA, comprenant une allocation de ressources pour chacun de la pluralité de noeuds (120) pour envoyer un accusé de réception au dispositif (110), l'allocation de ressources comprenant un débit de données pour que chacun de la pluralité de noeuds envoie son accusé de réception respectif au dispositif ;
dans lequel le débit de données est le même pour chacun de la pluralité de noeuds (120) et correspond au débit de données fiable le plus faible parmi tous les noeuds de la pluralité de noeuds (120), ou
dans lequel, pour chacun de la pluralité de noeuds (120), le débit de données est le débit de données fiable le plus faible pour ce noeud parmi la pluralité de noeuds (120) ; et
émettre (1112) le paquet de couche physique agrégé (240) .

2. Dispositif (1300) de communication, comprenant :
des moyens pour générer (1302) un paquet de couche physique agrégé, PHY, (240) comprenant une pluralité de paquets PHY (226) pour transmission à une pluralité de noeuds (120), le premier paquet PHY (226a) de la pluralité de paquets PHY comprenant une trame d'Allocation de Transmission d'Accusé de Réception de Bloc, ACK, BATA, comprenant une allocation de ressources pour chacun de la pluralité de noeuds (120) pour envoyer un accusé de réception au dispositif (1300), l'allocation de ressources comprenant un débit de données pour que chacun de la pluralité de noeuds envoie son accusé de réception respectif au dispositif ;
dans lequel le débit de données est le même pour chacun de la pluralité de noeuds (120) et correspond au débit de données fiable le plus faible parmi tous les noeuds de la pluralité de noeuds (120), ou
dans lequel, pour chacun de la pluralité de noeuds (120), le débit de données est le débit de données fiable le plus faible pour ce noeud parmi la pluralité de noeuds (120) ; et
des moyens pour émettre (1304) le paquet de couches physique agrégé (240).

3. Dispositif (1300) selon la revendication 2 ou procédé selon la revendication 1, dans lequel l'allocation de ressources comprend un identifiant pour chacun de la pluralité de noeuds (120) .

4. Dispositif (1300) selon la revendication 2 ou procédé selon la revendication 1, dans lequel l'allocation de ressources comprend un temps de transmission pour que chacun de la pluralité de noeuds (120) envoie son accusé de réception respectif au dispositif.

5. Dispositif (1300) selon la revendication 2 ou procédé selon la revendication 1, dans lequel l'allocation de ressources comprend une allocation de tonalité pour que chacun de la pluralité de noeuds (120) envoie son accusé de réception respectif au dispositif, l'allocation de ressources comprenant en outre une période de temps pour que chacun de la pluralité de noeuds (120) envoie son accusé de réception respectif au dispositif, la période de temps étant la même pour au moins deux noeuds de la pluralité de noeuds (120) pour envoyer leurs accusés de réception respectifs au dispositif simultanément.

6. Dispositif (1300) selon la revendication 2 ou procédé selon la revendication 1, dans lequel l'allocation de ressources comprend une allocation de flux spatial pour que chacun de la pluralité de noeuds envoie son accusé de réception respectif au dispositif, l'allocation de ressources comprenant en outre une période de temps pour que chacun de la pluralité de noeuds (120) envoie son accusé de réception respectif au dispositif, la période de temps étant la même pour au moins deux noeuds la pluralité de noeuds (120).

7. Procédé de communication par un dispositif, comprenant :
recevoir (1202) un paquet de couche physique agrégé, PHY, (240) comprenant une pluralité de paquets PHY (226) transmis par un noeud (110) à une pluralité d'autres noeuds (120), le premier paquet PHY (226a) de la pluralité de paquets PHY (226) comprenant une trame d'Allocation de Transmission d'Accusé de Réception de Bloc, ACK, BATA, comprenant une allocation de ressources pour que chacun de la pluralité d'autres noeuds (120) comprenant le dispositif accuse réception du paquet de couche physique agrégé (240) au noeud (110), l'allocation de ressources comprenant un débit de données pour que chacun de la pluralité d'autres noeuds (120) envoie son paquet d'accusé de réception respectif au noeud ;
dans lequel le débit de données est le même pour chacun de la pluralité de noeuds (120) et correspond au débit de données fiable le plus faible parmi tous les noeuds de la pluralité de noeuds (120), ou
dans lequel, pour chacun de la pluralité de noeuds (120), le débit de données est le débit de données fiable le plus faible pour ce noeud parmi la pluralité de noeuds (120) ;
générer (1204) un paquet d'accusé de réception en réponse à la réception du paquet de couche physique agrégé (240) ; et
transmettre le paquet d'accusé de réception au noeud (110) sur la base de l'allocation de ressources.

8. Dispositif (1400) de communication, comprenant :
des moyens pour recevoir (1402) un paquet de couche physique agrégé, PHY, (240) comprenant une pluralité de paquets PHY (226a) transmis par un noeud (110) à une pluralité d'autres noeuds (120) comprenant le dispositif, le premier paquet PHY (226a) de la pluralité de paquets PHY (226) comprenant une trame d'Allocation de Transmission d'Accusé de Réception de Bloc, ACK, BATA, comprenant une allocation de ressources pour chacun de la pluralité d'autres noeuds (120) pour accuser réception du paquet de couche physique agrégé (240) au noeud (110), l'allocation de ressources comprenant un débit de données pour que chacun de la pluralité d'autres noeuds (120) envoie son paquet d'accusé de réception respectif au noeud ;
dans lequel le débit de données est le même pour chacun de la pluralité d'autres noeuds (120) et correspond au débit de données fiable le plus faible parmi tous les noeuds de la pluralité d'autres noeuds, ou
dans lequel, pour chacun de la pluralité d'autres noeuds (120), le débit de données est le débit de données fiable le plus faible pour ce noeud parmi la pluralité d'autres noeuds (120) ;
des moyens pour générer (1404) un paquet d'accusé de réception en réponse à la réception du paquet de couche physique agrégé (240) ; et
des moyens pour transmettre (1406) le paquet d'accusé de réception au noeud (110) sur la base de l'allocation de ressources.

9. Dispositif (1400) selon la revendication 8 ou procédé selon la revendication 7, dans lequel l'allocation de ressources comprend un identifiant pour chacun de la pluralité d'autres noeuds (120) .

10. Dispositif (1400) selon la revendication 8 ou procédé selon la revendication 7, dans lequel l'allocation de ressources comprend un temps de transmission pour que chacun de la pluralité d'autres noeuds (120) envoie son paquet d'accusé de réception respectif au dispositif.

11. Dispositif (1400) selon la revendication 8 ou procédé selon la revendication 7, dans lequel l'allocation de ressources comprend une allocation de tonalités pour que chacun de la pluralité d'autres noeuds (120) envoie son paquet d'accusé de réception respectif au noeud (110), l'allocation de ressources comprenant en outre une période de temps pour que chacun de la pluralité d'autres noeuds envoie son paquet d'accusé de réception respectif au noeud, la période de temps étant la même pour qu'au moins deux noeuds de la pluralité d'autres noeuds (120) envoient leurs paquets d'accusé de réception respectifs au dispositif simultanément.

12. Dispositif (1400) selon la revendication 8 ou procédé selon la revendication 7, dans lequel l'allocation de ressources comprend une allocation de flux spatial pour que chacun de la pluralité d'autres noeuds (120) envoie son paquet accusé de réception respectif au noeud (110), l'allocation de ressources comprenant en outre une période de temps pour que chacun de la pluralité d'autres noeuds (120) envoie son paquet d'accusé de réception respectif au noeud (110), la période de temps étant la même pour au moins deux de la pluralité d'autres noeuds (120).

13. Produit programme informatique pour des communications, comprenant :
un support lisible par une machine (1006) comprenant des instructions qui, lorsqu'elles sont exécutées par un ordinateur, amènent l'ordinateur à exécuter le procédé de l'une quelconque des revendications 1, et 3 à 6 ou 7, et 9 à 12.
